# EUROPEAN PATENT APPLICATION

(11) **EP 4 748 810 A1**
(43) Date of publication of application: **27.05.2026**
(21) Application number: 25218183.9
(22) Date of filing: 25.11.2025
(51) Int. Cl.: C04B 26/26

(54) **BITUMINOUS MEMBRANE COMPRISING MILLED MINERAL WOOL WASTE**

(30) Priority: 26.11.2024 EP 24215309
(71) Applicant: Saint-Gobain Italia S.p.A., 20152 Milano (IT)
(72) Inventor: LAZZERO, Marco, 20152 Milan (IT)
(74) Representative: Saint-Gobain Recherche

(57) **Abstract**

The present invention relates to a bituminous membrane comprising a milled mineral wool waste. It also relates to a method for manufacturing such bituminous membrane, and to method for soundproofing and/or waterproofing a substrate using such bituminous membrane.

## Description

The present invention relates to a bituminous membrane comprising a milled mineral wool waste. It also relates to a method for manufacturing such bituminous membrane, and to method for soundproofing and/or waterproofing a substrate using such bituminous membrane.

Bituminous membranes are highly valued in the construction industry for their excellent water resistance, durability, and flexibility. More particularly, they play a critical role in roofing, foundation, and other structural waterproofing applications. Typically, bituminous membranes are used in flat or low-slope roofing systems, where they provide a seamless waterproof barrier, protecting structures from water infiltration, moisture damage, and the effects of harsh environmental conditions.

Bituminous membranes are made from bitumen, a byproduct of crude oil refining, which serves as the key binding and waterproofing agent in the membrane.

These membranes are typically produced in layers. The base layer usually consists of a reinforcement material, such as a non-woven polyester or glass fiber, which provides mechanical strength. This reinforcement is then impregnated and coated with the bitumen. The membrane surface can be further protected with mineral granules, sand, or other surfacing materials to improve UV resistance, for aesthetic purposes, or to add other functionalities to the membranes.

Additives and fillers are generally incorporated into the bitumen in order to improve the mechanical, physical, and/or chemical properties of the membranes, making such membranes more suitable for specific applications. These additives and fillers can be chosen to enhance durability, flexibility, weather resistance, and other performances. For instance, synthetic rubbers or plasticizers can be added to improve the elasticity and flexibility of the membrane. On the contrary, polypropylene can be added to increase the membrane's rigidity, and to improve resistance to heat, UV rays, and aging. Fillers added to bitumen, such as limestone, talc, or carbon black, may allow a reduction of the production cost of the membrane and may have a positive impact on its mechanical properties. However, many of the conventional fillers are sourced from mining activities, which can cause significant environmental degradation, such as habitat destruction, air and water pollution, and energy-intensive extraction processes. In addition, some fillers, like silica or limestone, may be subject to cost fluctuations.

Hence, there is a need for an alternative filler that is compatible with the performance requirements of bituminous membranes, while allowing the production of bituminous membranes to have a reduced environmental impact.

### SUMMARY

In this context, the inventors have surprisingly found that it was possible to replace at least a part of the fillers used in bituminous membranes by mineral wool wastes, in a milled form, without impairing the performances of the membrane. Such mineral wool wastes may come from the production of mineral wool, including mineral materials solidified in the form of grains or infibrates, or bundles of fibres recovered on the various receiving or conveying surfaces, as well as cut mineral wool felt. Mineral wool wastes also include mineral wool wastes coming from construction or deconstruction.

The use of mineral wool wastes as fillers in bituminous membranes thus allows reducing the environmental impact of bituminous membranes, but also addressing the issue of the management of mineral wool wastes, while maintaining the performances of bituminous membranes.

Thus, the present invention relates to a bituminous membrane comprising a milled mineral wool waste in a content of from 0.1 to 80 % by weight, relative to the total weight of the bituminous membrane.

The present invention also relates to a method for manufacturing a bituminous membrane as defined herein, comprising:
- milling a mineral wool waste, so as to form a milled mineral wool waste,
- mixing bitumen and the milled mineral wool waste, so as to form an intermediate bituminous compound,
- milling the intermediate bituminous compound, so as to form a bituminous compound, and
- forming a bituminous membrane using said bituminous compound.

Another object of the present invention is a method for soundproofing and/or waterproofing a substrate, comprising applying a bituminous membrane as defined herein.

### DETAILED DESCRIPTION

The bituminous membrane of the invention comprises a milled mineral wool waste.

The term "milled mineral wool waste" refers to a mineral wool waste that has been subjected to a milling process.

The mineral wool waste indicates that the mineral wool is derived from recycled or waste sources of mineral wool.

More particularly, the mineral wool waste includes all residues coming from the production of mineral wool, for instance mineral materials solidified in the form of grains or infibrates, or recovered in the form of solid flakes, or bundles of fibres recovered (e.g. by washing) on the various receiving or conveying surfaces, as well as cut mineral wool felt. Mineral wool recyclates also include mineral wool waste coming from construction or deconstruction.

Mineral wool waste may in particular be a waste of rock wool, a waste of glass wool (including in particular low alumina and high alumina glass wool), or a mixture thereof.

In other words, the milled mineral wool waste may be a milled stone wool waste, a milled glass wool waste or a mixture thereof.

Mineral wool generally has a chemical composition comprising the following constituents: SiO2: 30 to 75% by mass, CaO+MgO: 5 to 45% by mass, Al2O3: 0 to 30% by mass, Na2O+K2O: 0 to 20% by mass, Fe2O3: 0 to 20% by mass, B2O3: 0 to 14% by mass, MnO: 0 to 4% by mass.

The term "rock wool" generally refers to a mineral wool having a chemical composition comprising the following constituents:
SiO2: 30 to 50% by mass, Al2O3: 10 to 22% by mass, CaO+MgO: 20 to 45% by mass, Fe2O3: 0 to 20% by mass, Na2O+K2O: 0 to 8% by mass, B2O3: 0 to 1% by mass.

The term "glass wool" generally refers to a mineral wool having a chemical composition comprising the following constituents:
- For "low-alumina" glass wools:
   SiO2: 50 to 75% by mass, Al2O3: 0 to 8% by mass, CaO+MgO: 5 to 20% by mass, Fe2O3: 0 to 3% by mass, Na2O+K2O: 6 to 20% by mass, B2O3: 0 to 14% by mass, MnO: 0 to 4% by mass.
- For "high-alumina" glass wools:
   SiO2: 35 to 55% by mass, Al2O3: 16 to 27% by mass, CaO+MgO: 3 to 30% by mass, Fe2O3: 0 to 15% by mass, Na2O+K2O: 9 to 17% by mass, B2O3: 0 to 5% by mass.

The compositions of mineral wool are herein expressed with oxides, by convention. In particular, if the (total) iron oxide content is expressed in the form of Fe2O3, this does not mean that this iron oxide is necessarily and exclusively present in the ferric form. Iron oxide can be present in both its ferric (Fe2O3) and ferrous (FeO) forms, and it is only by convention that the total iron oxide content is designated by Fe2O3. Preferably, the sum of the mass contents of SiO2, Al2O3, CaO, MgO, Fe2O3, Na2O, K2O, and B2O3 in the mineral wool compositions described above is greater than or equal to 90%, or even greater than or equal to 95%.

Mineral wool waste can be a waste of a non-bonded mineral wool, of a bonded mineral wool or of a mixture thereof.

The expression "bonded mineral wool" here refers to a mineral wool comprising mineral fibers bonded by a cured or non-cured sizing (e.g. an organic binder), said sizing being typically on the surface of said mineral fibers.

The expression "non-bonded mineral wool" refers to a mineral wool, obtained after fiberization and whose fibers are not bonded to each other by a sizing (as opposed to a bonded mineral wool).

When mineral wool waste is a bonded mineral wool waste, the sizing is typically present in the mineral wool waste in a content from 0.1 to 10% by weight, preferably from 0.5 to 7% by weight of sizing dry matter, relative to the total weight of dry mineral wool waste. The concentration of dry extracts in the sizing is generally from 5 to 40% by weight, preferably from 10 to 20% by weight.

When mineral wool waste is a bonded mineral wool waste, the sizing may for instance be a sugar-based sizing or a phenolic-based sizing.

In other words, the milled mineral wool waste may comprise a sugar-based sizing or a phenolic-based sizing.

Phenolic-based sizing is well-known to the skilled artisan, and is in particular described in the following documents: EP2609129, EP2091986, EP1289901, and EP1551892. Phenolic-based sizing refers to a sizing based on a phenolic resin, which is a thermosetting resin obtained by condensation of phenol and formaldehyde (and optionally further constituents such as glycine, urea, an amine, or an amino alcohol). The phenolic-based sizing usually comprises further components, such as a catalyst (e.g. ammonium sulfate or sulfamate), a coupling agent (e.g. a silane, more particularly an aminosilane), a water-repellent agent (e.g. a silicone), an anti-dust agent (e.g. an oil), a hydrophobic agent, a polycondensation retarder (e.g. ammonia), a stabilizer (e.g. metal oxide nanogels, glass particles), a flame retardant (e.g. ammonium phosphates or polyphosphates), clays, a thixotropic agent (e.g. polysaccharides such as starch, potato starch, polysaccharide derivatives such as methylcellulose), or pigment dispersers. The phenolic-based sizing generally comprises phenolic resin in a content of from 50 to 90% by weight, preferably from 70 to 90% by weight, relative to the dry matter of the sizing (i.e. dry weight of phenolic resin / dry weight of sizing).

Sugar-based sizing is well-known to the skilled artisan, and is in particular described in the following documents: US2010/0282996, US2012/0263934, WO2012/168619, and WO2012/168621.

The expression "sugar" designates herein one or more molecules chosen from monosaccharides, oligosaccharides or polysaccharides. The sugar is at least one saccharide chosen from reducing, non-reducing and hydrogenated saccharides. The expression "reducing saccharide" must be understood in the conventional sense, namely a monosaccharide or a polysaccharide carrying a free hemiacetalic OH group, this group having in particular a reducing action on cupro-alkaline solutions. As examples of reducing monosaccharides, mention may be made of reducing saccharides containing 3 to 8 carbon atoms, preferably aldoses. The particularly preferred aldoses are natural aldoses (belonging to the D series), in particular hexoses such as glucose, mannose and galactose. The expression "non-reducing saccharide" must be understood in the conventional sense, namely that it designates a saccharide consisting of several saccharide units of which the carbon 1 bearing the hemiacetal OH group is engaged in a bond. A reducing saccharide within the meaning of the invention does not have any reducing action on cupro-alkaline solutions. As examples of such non-reducing saccharides, mention may be made of diholosides such as trehalose, isotrehaloses, sucrose, and isosaccharoses ("isosucroses" in English); triholosides such as melezitose, gentianose, raffinose, erlose and umbelliferose; tetraholosides such as stachyose; and pentaholosides such as verbascose. By "hydrogenated saccharide" is meant all the products resulting from the reduction, in any manner whatsoever, of a saccharide chosen from monosaccharides, oligosaccharides, linear, branched or cyclic polysaccharides, and mixtures of these products, in particular starch hydrolysates. Examples of hydrogenated saccharides include erythritol, arabitol, xylitol, sorbitol, mannitol, iditol, maltitol, isomaltitol, lactitol, cellobitol, palatinitol, maltotritol and the hydrogenation products of starch hydrolysates. The sugar-based sizing advantageously further comprises a crosslinking agent, which may be chosen from monomeric or polymeric polyfunctional organic acids (in particular citric acid), primary or secondary amines, ammonia, metal or ammonium salts of organic or inorganic acids (in particular ammonium sulfate or metal sulfate). It may further comprise a reactive compound with ethylenic unsaturation, which may in particular be the reaction product of maleic anhydride and tetraethylpentamine, particularly reactive with non-reducing sugars. It may further comprise additives, such as a silane, an aminosilane, as a coupling agent, and/or a silicone as a water-repellent agent.

The sugar-based sizing generally comprises (or is formed from) sugar in a content of from 30 to 90% by weight of the dry matter of the sizing (i.e. dry weight of sugar / dry weight of sizing).

The content of milled mineral wool waste in the bituminous membrane is from 0.1 to 80 % by weight, relative to the total weight of the bituminous membrane. Advantageously, the content of milled mineral wool waste is from 0.2 to 60% by weight (e.g. from 1 to 60% by weight), preferably from 0.4 to 40 % by weight (e.g. from 1 to 40% by weight), more preferably from 0.5 to 30% by weight, even more preferably from 1 to 20% by weight, in particular from 2 to 10% by weight, relative to the total weight of the bituminous membrane.

In order to optimize the integration of the milled mineral wool waste in the bituminous membrane, it is advantageous that the fibers of the milled mineral wool waste have a length of from 0.05 to 2000 µm. Preferably, the fibers of the milled mineral wool waste have a length of from 0.07 to 1500 µm, more preferably from 0.1 to 1000 µm, even more preferably from 0.1 to 500 µm, for instance from 0.5 to 300 µm.

In some embodiments, the milled mineral wool waste is such that at least 50% of the fibers have a length from 0.07 to 1500 µm, more preferably from 0.1 to 1000 µm, even more preferably from 0.1 to 500 µm, for instance from 0.5 to 300 µm.

In some embodiments, the milled mineral wool waste is such that at least 70% of the fibers have a length from 0.07 to 1500 µm, more preferably from 0.1 to 1000 µm, even more preferably from 0.1 to 500 µm, for instance from 0.5 to 300 µm.

In some embodiments, the milled mineral wool waste is such that at least 90% of the fibers have a length from 0.07 to 1500 µm, more preferably from 0.1 to 1000 µm, even more preferably from 0.1 to 500 µm, for instance from 0.5 to 300 µm.

In some embodiments, the milled mineral wool waste is such that the fibers have an average length from 0.07 to 1500 µm, more preferably from 0.1 to 1000 µm, even more preferably from 0.1 to 500 µm, for instance from 0.5 to 300 µm.

The fibers length (and average length) can be determined by sieve tests or SEM analysis.

The bituminous membrane of the invention comprises bitumen. The content of bitumen is advantageously from 10 to 99.5% by weight (e.g. from 10 to 50 % by weight), preferably from 15 to 99%, more preferably from 20 to 98%, even more preferably from 30 to 95% by weight, in particular from 40 to 90% by weight, for instance from 50 to 80 % by weight, relative to the total weight of the bituminous membrane.

The bituminous membrane may further comprise one or more ingredients (i.e. distinct from the milled mineral wool waste), in order to tune the properties, in particular the physical and chemical properties, of the bituminous membrane. In particular, the bituminous membrane may further comprise one or more of the following ingredients, distinct from the milled mineral wool waste:
- fillers,
- additives.

The fillers (i.e. distinct from the milled mineral wool waste) may in particular be mineral fillers. Examples of fillers include, but are not limited to, limestone, talc, chalk, silica, slate, sand, clay, fly ash, perlite, feldspath, baryte, glass bubbles, cenospheres, or any mixture thereof.

The fillers distinct from the milled mineral wool waste may represent up to 80 % by weight, relative to the total weight of the bituminous membrane. More particularly, the content of fillers distinct from the milled mineral wool waste is advantageously from 0.1 to 80 % by weight, preferably from 1 to 75 % by weight, more preferably from 2 to 70% by weight, for instance from 4 to 60 % by weight, or even from 5 to 50% by weight, relative to the total weight of the bituminous membrane.

Said additives (i.e. distinct from the milled mineral wool waste) may in particular be chosen from polymer additives, plasticizers (e.g. mineral oil where such mineral oil may be a regenerated oil, or a natural oil such as rapeseed oil, olive oil, sunflower oil, or peanut oil, where the natural oil may be a virgin, recovered, or refined oil), flame retardants (e.g. halogenated compounds, aluminum hydroxide (ATH), magnesium hydroxide, or phosphate-based retardants), asphalt flux oils (e.g. petroleum-based flux oils like aromatic oils and paraffinic oils), anti-roots, pigments (e.g. carbon black, titanium oxide, or iron oxide) and any mixture thereof.

Polymer additives are usually used to tune the mechanical properties (e.g. flexibility, elasticity, rigidity), and/or to improve the durability, the heat resistance, or UV resistance of the bituminous membranes. Such polymer additives are typically organic polymer additives. Examples of such polymer additives include, but are not limited to, polypropylene (in particular, atactic or isotactic polypropylene), polyethylene, EPR polymer (EPR = ethylene propylene rubber), SBS polymer (SBS = styrene-butadiene-styrene), EVA polymer (EVA = ethylene vinyl acetate), EPDM polymer (EPDM = "ethylene propylene diene monomer"), a TPO polymer (TPO = thermoplastic polyolefin), or any mixture thereof.

The polymer additives may represent up to 35 % by weight, relative to the total weight of the bituminous membrane. More particularly, the content of polymer additives is advantageously from 0.1 to 35 % by weight, preferably from 2 to 30 % by weight, more preferably from 4 to 30 % by weight, relative to the total weight of the bituminous membrane.

The additives may represent up to 60 % by weight, relative to the total weight of the bituminous membrane. More particularly, the total content of additives is advantageously from 0.1 to 60 % by weight, preferably from 1 to 55 % by weight, more preferably from 2 to 50 % by weight, for instance from 4 to 50 % by weight, relative to the total weight of the bituminous membrane.

The bitumen, the milled mineral wool waste, and the optional further ingredients described above (e.g. fillers and additives) are typically part of what is usually called a bituminous compound. The milled mineral wool waste and the optional further ingredients described above (e.g. fillers and additives) are typically dispersed throughout the bitumen.

The bituminous membrane can comprise one or several layers of said bituminous compound.

Generally, the bituminous membrane further comprises a reinforcement material. Such reinforcement material advantageously provides dimensional stability and improves the durability, the strength and the tear resistance of the bituminous membrane. The reinforcement material may be:
- at least partially (for instance, totally) embedded within one layer of said bituminous compound,
- in the form of a layer in contact between two layers of bituminous compound, or
- coated on one surface of the bituminous compound.

Such reinforcement material may for instance be a fiberglass mat, a polyester mat, a polyester felt, a polyester net, a nylon net, a fiberglass net, a carbon net, a paper, a mat of natural fibers (e.g. hemp fibers, cotton fibers, or coconut fibers), or a combination thereof.

Typically, the reinforcement material represents from 0.1 to 30 % by weight, preferably from 0.5 to 30 % by weight, more preferably from 0.7 to 15 % by weight, for instance from 1 to 10 % by weight, of the total weight of the bituminous membrane.

The bituminous membrane may further comprise at least one surface finishing. More particularly, the bituminous membrane may comprise two surface finishings as external layers of the bituminous membrane.

The surface finishing may for instance be a mineral finishing (e.g. a finishing made of sand, talc, slate, or a mixture thereof), a polyolefin-based (e.g. polypropylene, polyethylene, or polyethylene terephthalate) film, a polyolefin-based (e.g. polypropylene, polyethylene, or polyethylene terephthalate) tissue, a silicone-based film, a silicone-based tissue, a metal foil or a combination thereof.

Typically, said at least one surface finishing represents from 0.1 to 50 % by weight, more preferably from 0.5 to 35% by weight, of the total weight of the bituminous membrane.

In some embodiments, the bituminous membrane comprises:
- a layer of bituminous compound comprising bitumen, a milled mineral wool waste, and optionally fillers and/or additives (i.e. typically chosen from those described above), said layer of bituminous compound having a first face and a second face;
- a reinforcement material within said layer of bituminous compound;
- a first surface finishing as external layer coated on a first face of the layer of bituminous compound; and
- a second surface finishing as external layer coated on a second face of the layer of bituminous compound.

Said first and second surface finishing may be identical or different.

In some embodiments, the bituminous membrane comprises:
- a first layer of bituminous compound comprising bitumen, a milled mineral wool waste, and optionally fillers and/or additives (i.e. typically chosen from those described above), said first layer of bituminous compound having a first face and a second face;
- a second layer of bituminous comprising bitumen, a milled mineral wool waste, and optionally fillers and/or additives (i.e. typically chosen from those described above), said second layer of bituminous compound having a first face and a second face; where the first face of the first layer of bituminous compound is in contact with the first face of the second layer of bituminous compound;
- a reinforcement material within said first and/or second layer of bituminous compound;
- a first surface finishing as external layer coated on a second face of the first layer of bituminous compound; and
- a second surface finishing as external layer coated on a second face of the second layer of bituminous compound.

Said first and second layer of bituminous compound may be identical or different.

Said first and second surface finishing may be identical or different.

In some embodiments, the bituminous membrane comprises:
- a first layer of bituminous compound comprising bitumen, a milled mineral wool waste, and optionally fillers and/or additives (i.e. typically chosen from those described above); said first layer of bituminous compound comprising an internal face and an external face;
- a second layer of bituminous compound comprising bitumen, a milled mineral wool waste, and optionally fillers and/or additives (i.e. typically chosen from those described above); said second layer of bituminous compound comprising an internal face and an external face;
- a layer of reinforcement material in contact between the internal face of the first layer of bituminous compound and the internal face of the second layer of bituminous compound; and
- a first surface finishing as external layer coated on the external face of the first layer of bituminous compound; and
- a second surface finishing as external layer coated on the external face of the second layer of bituminous compound.

Said first and second layer of bituminous compound may be identical or different.

Said first and second surface finishing may be identical or different.

In some embodiments, the bituminous membrane comprises:
- a layer of bituminous compound comprising bitumen, a milled mineral wool waste, and optionally fillers and/or additives (i.e. typically chosen from those described above); said layer of bituminous compound comprising a first face and a second face:
- a layer of a reinforcement material coated onto the first face of the layer of bituminous compound;
- a surface finishing coated onto the second face of the layer of bituminous compound.

The bituminous membrane preferably has a thickness of from 0.2 to 10 mm, preferably from 2 to 5 mm.

Advantageously, the bituminous membrane has a tensile strength, in machine direction, from 50 to 5000 N/5cm, preferably from 100 to 2000 N/5cm.

Advantageously, the bituminous membrane has a tensile strength, in cross machine direction, from 50 to 5000 N/5cm, preferably from 100 to 2000 N/5cm.

Advantageously, the bituminous membrane has an elongation at break, in machine direction, from 0.1 to 100%, preferably from 1 to 60 %.

Advantageously, the bituminous membrane has an elongation at break, in cross machine direction, from 0.1 to 100%, preferably from 1 to 60 %.

The tensile strength and the elongation at break can be measured according to standard EN 12311-1 (Bitumen sheet for roof waterproofing - Determination of tensile properties).

Advantageously, the temperature of cold flexibility of the bituminous membrane is of from - 60°C to 25°C, preferably from -40°C to 5°C, more preferably -20°C to 0°C. The temperature of cold flexibility can be measured according to standard EN 1109.

Advantageously, the temperature of "ring and ball" of the bituminous membrane is of from 60 to 180°C, preferably from 80 to 160°C, more preferably from 100 to 160°C. The temperature of "ring and ball" can be measured according to standard EN 1427.

Advantageously, the watertightness of the bituminous membrane is of from 0.1 to 1000 kPa, preferably from 1 to 800 kPa, more preferably from 10 to 600 kPa, even more preferably from 20 to 400 kPa. Watertightness can be measured according to standard EN 1928.

The present invention also relates to a method for manufacturing a bituminous membrane as defined herein, said method comprising:
i) milling a mineral wool waste, so as to form a milled mineral wool waste,
ii) mixing bitumen and the milled mineral wool waste, so as to form an intermediate bituminous compound,
iii) milling the intermediate bituminous compound, so as to form a bituminous compound, and
iv) forming a bituminous membrane using said bituminous compound.

The milling in steps i) and iii) is typically a mechanical milling. Any type of equipment can be used for such milling, such as a shredder or a rod mill.

The intermediate bituminous compound usually has a viscosity from 200 to 100 000 centipoises, preferably from 500 to 80 000 centipoises, more preferably from 600 to 70 000 centipoises. Such viscosity can be measured using a viscosimeter (e.g. Rotational Brookfield, for instance with spindle n°27), at a temperature from 165°C to 225 °C (e.g. from 180 to 200°C, for instance 190°C), and at a speed of from 5 to 100rpm, preferably from 10 to 50 rpm, more preferably from 12 to 25 rpm (for instance 18 rpm).

When further fillers and/or additives are present, they are typically added in the mixing step ii).

The step of forming the bituminous membrane using said bituminous compound comprises typically forming at least one layer of bituminous compound.

When a reinforcement material is present, the forming step advantageously comprises applying the bituminous compound formed in step iii) onto the reinforcement material, more particularly onto each face of the reinforcement material. The applying of the bituminous compound onto the reinforcement material can be repeated several times.

When at least one surface finishing is present, the forming step advantageously comprises applying at least one surface finishing onto a layer of bituminous compound, more particularly applying a first surface finishing onto a first face of the layer of bituminous compound and optionally applying a second surface finishing onto a second face of the layer of bituminous compound.

The present invention also relates to a method for soundproofing and/or waterproofing a substrate, comprising applying a bituminous membrane as defined herein onto said substrate.

The substrate is preferably made of cementitious material (for example concrete or mortar), stone (in particular limestone), brick, terracotta, sandstone, ceramic, wood, a thermal insulation material (e.g. mineral wool, wood wool, polyisocyanurate foam, polyurethane foam, glass foam, extruded polystyrene "XPS", expanded polystyrene "EPS") , metal (e.g. steel), bitumen, or any combination thereof, more preferably cementitious material. The substrate may also be a waterproofing layer or membrane (in particular, an old waterproofing layer or membrane).

The substrate may for instance be a substrate of a roof (e.g. flat roof, sloped roof), a floor (e.g. a floating floor), or a wall, preferably a roof.

Applying the bituminous membrane may be carried out by torch application, hot air, gluing, mechanical fastening (e.g. using nails or screws), loose laid (e.g. by using a ballast such as gravel, concrete, or floating tiles), or self-adhesion (also known as "peel and stick").

Another object of the invention is a use of a bituminous membrane as defined herein for the following applications: waterproofing of flat roof, waterproofing of sloped roof, underlays for discontinuous roofing, water vapor control layer, waterproofing of a trafficable surface (e.g. concrete bridge decks), waterproofing of a roof or basement of a building, waterproofing of a deck of bridge, waterproofing underlays for walls, damp proof sheets including bitumen basement thanking sheets, base layer for the soundproofing of floating floors.

The present invention is illustrated by the following non-limiting examples.

### EXAMPLES

A bituminous membrane having the following composition was prepared:
- 2200 g bitumen,
- 400 g of milled mineral wool waste,
- 1400 g of limestone,
- 400 g of polymer additives, and
- 140 g of polyester reinforcement.

The bituminous membranes were formed according to the following general procedure: A mineral wool waste was subjected to a milling step. Then, the milled mineral wool waste was mixed with bitumen, limestone and polymer additives. The resulting mixture was subjected to a milling step, and a bituminous compound was obtained. Then, a polyester reinforcement was impregnated and thus coated by the bituminous compound on both surfaces. To this intermediate membrane, a 6-micron polyethylene film (surface finishing) was applied on both surfaces.

A comparative composition, deprived of milled mineral wool waste, was prepared according to a similar procedure. The composition of such comparative bituminous membrane corresponds to the above described composition, wherein said 400 g of milled mineral waste are replaced with 400 g of limestone.

The properties as described in Table 1 of the bituminous membrane of the invention and of the comparative bituminous membrane were compared.

Cold flexibility was measured according to standard EN 1109.

Ring and ball was measured according to standard EN 1427.

Watertightness was measured according to standard EN 1928.

The tensile strength and the elongation at break were measured according to standard EN 12311-1.

**Table 1**

| | Bituminous membrane of the invention | Comparative bituminous membrane |
|---|---|---|
| Cold flexibility | ^{~} -10°C | ^{~} -10°C |
| Ring and ball | ^{~} 150°C | ^{~} 150°C |
| Waterthigness | ^{~} 60kPa | ^{~} 60kPa |
| Tensile strength (a-MD / b-CMD) | a- 500 (+/- 20%) N/5cm | a- 500 (+/- 20%) N/5cm |
| | b- 400 (+/- 20%) N/5cm | b- 400 (+/- 20%) N/5cm |
| Elongation at break (a-MD / b-CMD) | a- 35 (+/- 15) % | a- 35 (+/- 15) % |
| | b- 40 (+/- 15) % | b- 40 (+/- 15) % |

| | | |
|---|---|---|
| MD : Machine direction / CMD : Cross Machine Direction | | |

The results of Table 1 demonstrates that the bituminous membrane comprising 9% of milled mineral wool waste has performances similar to that of the bituminous membrane deprived of milled mineral wool waste.

## Claims

1. A bituminous membrane comprising a milled mineral wool waste in a content of from 0.1 to 80 % by weight, relative to the total weight of the bituminous membrane.

2. The bituminous membrane according to claim 1, wherein the content of milled mineral wool waste is from 0.2 to 60% by weight, preferably from 0.4 to 40 % by weight, more preferably from 0.5 to 30% by weight, even more preferably from 1 to 20% by weight, in particular from 2 to 10% by weight, relative to the total weight of the bituminous membrane.

3. The bituminous membrane according to claim 1 or 2, wherein the fibers of the milled mineral wool waste have a length of from 0.05 to 2000 µm, for instance from 0.07 to 1500 µm, from 0.1 to 1000 µm, from 0.1 to 500 µm, or from 0.5 to 300 µm.

4. The bituminous membrane according any one of claims 1 to 3, wherein the milled mineral wool waste is a milled stone wool waste, a milled glass wool waste or a mixture thereof.

5. The bituminous membrane according to any one of claims 1 to 4, wherein the milled mineral wool waste comprises a sugar-based sizing.

6. The bituminous membrane according to any one of claims 1 to 5, wherein the milled mineral wool waste comprises a phenolic-based sizing.

7. The bituminous membrane according to any one of claims 1 to 6, wherein said bituminous membrane comprises bitumen in a content of from 10 to 99.5% by weight, preferably from 15 to 99%, more preferably from 20 to 98%, even more preferably from 30 to 95% by weight, in particular from 40 to 90% by weight, relative to the total weight of the bituminous membrane.

8. The bituminous membrane according to any one of claims 1 to 7, wherein said bituminous membrane further comprises one or more of the following ingredients, distinct from the milled mineral wool waste:
- fillers, preferably from 0.1 to 80 % by weight, more preferably from 1 to 75 % by weight, even more preferably from 2 to 70% by weight, for instance from 4 to 60 % by weight, or even from 5 to 50% by weight, relative to the total weight of the bituminous membrane;
- additives, preferably in a content of from 0.1 to 60 % by weight, more preferably from 1 to 55 % by weight, even more preferably from 2 to 50 % by weight, for instance from 4 to 50 % by weight, relative to the total weight of the bituminous membrane.

9. The bituminous membrane according to any one of claims 1 to 8, wherein said bituminous membrane further comprises a reinforcement material, such as a fiberglass mat, a polyester mat, a polyester felt, a polyester net, a nylon net, a fiberglass net, a carbon net, a paper, a mat of natural fibers, or a combination thereof.

10. The bituminous membrane according to claim 9, wherein the reinforcement material represents from 0.1 to 30 % by weight, preferably from 0.5 to 30 % by weight, more preferably from 0.7 to 15 % by weight, for instance from 1 to 10 % by weight, of the total weight of the bituminous membrane.

11. The bituminous membrane according to any one of claims 1 to 10, wherein said bituminous membrane further comprises at least one surface finishing, which is preferably a mineral finishing, a polyolefin-based film, a polyolefin-based tissue, a silicone-based film, a silicone-based tissue, a metal foil or a combination thereof.

12. The bituminous membrane according to claim 11, wherein said at least one surface finishing represents from 0.1 to 50 % by weight, more preferably from 0.5 to 35% by weight, of the total weight of the bituminous membrane.

13. The bituminous membrane according to any one of claims 1 to 12, wherein said bituminous membrane has a thickness of from 0.2 to 10 mm, preferably from 2 to 5 mm.

14. A method for manufacturing a bituminous membrane as defined in any one of claims 1 to 13, comprising:
- milling a mineral wool waste, so as to form a milled mineral wool waste,
- mixing bitumen and the milled mineral wool waste, so as to form an intermediate bituminous compound,
- milling the intermediate bituminous compound, so as to form a bituminous compound, and
- forming a bituminous membrane using said bituminous compound.

15. A method for soundproofing and/or waterproofing a substrate, comprising applying a bituminous membrane as defined in any one of claims 1 to 13 onto said substrate,
wherein said substrate is preferably a substrate of a roof, a floor, or a wall.
